# EUROPÄISCHE PATENTSCHRIFT

(11) **EP 3 371 476 B1**
(45) Veröffentlichungstag und Bekanntmachung des Hinweises auf die Patenterteilung: **29.12.2021**
(21) Anmeldenummer: 16751599.8
(22) Anmeldetag: 16.08.2016
(51) Int. Cl.: F16D 55/2265, F16D 55/227, F16D 65/00

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 05.11.2015 DE 102015119048
(43) Veröffentlichungstag der Anmeldung: 12.09.2018
(73) Patentinhaber: KNORR-BREMSE Systeme für Nutzfahrzeuge GmbH, 80809 München (DE)
(72) Erfinder: HACKLBERGER, Michael, 94127 Neuburg am Inn (DE); MOLNAR, Markus, 94081 Fürstenzell (DE); KAISER, Christoph, 94501 Aidenbach (DE); ASEN, Alexander, 94428 Eichendorf (DE); FRICKE, Jens, 94474 Vilshofen (DE); HABERMANN, Dimitrij, 94569 Stephansposching (DE); KOCH, Werner, 73326 Deggingen (DE); NESMJANOWITSCH, Igor, 94491 Hengersberg (DE); SCHÖFBERGER, Tobias, 84048 Mainburg (DE); STÖGER, Christian, 94486 Osterhofen (DE); WERTH, Alexander, 80999 München (DE); KRAUSS, Philipp, 80997 München (DE)
(86) Internationale Anmeldenummer: PCT/EP2016/069408
(87) Internationale Veröffentlichungsnummer: WO 2017/076529

(56) Entgegenhaltungen:
- EP-A1- 3 101 301
- EP-A2- 0 046 432
- WO-A1-2014/020941
- DE-A1-102013 114 899
- US-A1- 2013 126 280

## Beschreibung

Die Erfindung betrifft eine Scheibenbremse für ein Nutzfahrzeug nach dem Oberbegriff des Anspruchs 1.

Bei einer solchen, auch als Schiebesattel-Scheibenbremse bekannten Scheibenbremse ist der Bremssattel mittels Führungsholmen, bezogen auf eine Bremsscheibe, axial verschiebbar gehalten, wobei die Führungsholme in Korrespondenz mit Gleitbuchsen des Bremssattels jeweils ein Axial-Gleitlager bilden.

Die Führungsholme sind an einem gegenüber dem Bremssattel ortsfesten Bremsträger mittels einer Schraube befestigt, die durch eine Bohrung des Führungsholms geführt ist. Dabei stützt sich die Schraube mit ihrem Kopf am Grund einer Senkung des Führungsholms ab und ist andererseits mit ihrem Gewindeschaft in den Bremsträger eingedreht.

Der Führungsholm liegt mit einer Stirnseite an der zugeordneten Oberfläche des Bremsträgers an, wobei als Schraube eine hochfeste Dehn-Schraube Verwendung findet, die unter Vorspannung den Führungsholm an den Bremsträger anpresst.

Betriebsbedingt kann es zu Verformungen im Anschlussbereich der Führungsholme am Bremsträger kommen, wodurch Biegemomente wirksam sind, die die axiale Vorspannung der Verschraubung insoweit beeinträchtigen, dass diese nicht mehr ausreicht, um den Führungsholm sicher am Bremsträger zu halten. Dadurch besteht die Gefahr einer relativen Verdrehung des Führungsholms zum Bremsträger, in deren Folge die axiale Vorspannkraft sinkt und sich die Verschraubung lockert.

Zwar ist schon versucht worden, durch Sicherungsmittel, beispielsweise einer Unterlegscheibe, die zwischen dem Schraubenkopf und der Senkung des Führungsholms angeordnet ist, eine Lockerung der Schraube zu verhindern, jedoch hat sich herausgestellt, dass sich im Fahrbetrieb zunächst der Führungsholm im Bereich der Schnittstelle zum Bremsträger lockert.

Der Einsatz von Sicherungselementen in Form von Fächerscheiben, Zahnscheiben, Spannscheiben oder dergleichen ist ebenfalls nicht geeignet, eine ausreichende Sicherung zu schaffen, zumal die Stirnfläche des Führungsholms gehärtet ist.

Das Problem eines Lockerns der Verbindung des Führungsholms mit dem Bremsträger ergibt sich auch, wenn die dem Führungsholm zugewandte Oberfläche des Bremsträgers mit einer reibwertreduzierenden Beschichtung versehen ist, beispielsweise aus Zinkphosphat.

Aufgrund des verminderten Reibschlusses zwischen dem Führungsholm und dem Bremsträger erhöht sich das Risiko einer Verdrehung des Führungsholms, die, wie erwähnt, zu einem Verlust der Vorspannkraft der Schraube mit der Gefahr eines Totalausfalls der Bremse, zumindest jedoch deren eingeschränkter Funktionsfähigkeit führen kann.

Grundsätzlich stellt sich eine Scheibenbremse als sicherheitsrelevantes Bauteil dar, so dass die beschriebene potentielle Gefahr eines Lösens des Führungsholms und letztendlich des Bremssattels kürzere Serviceintervalle zur Kontrolle erfordert.

Aus der WO 2014/020941 A1 ist eine Scheibenbremse bekannt, bei der der Führungsholm einen über seine Mantelfläche vorstehenden Kragen aufweist, hinter dem sich ein zylindrischer Vorsprung erstreckt, der in eine Durchgangsbohrung des Bremsträgers eingesteckt ist. Zur axialen Sicherung des Führungsholms wird hier vorgeschlagen, anstelle einer Gewindeverbindung der beiden Bauteile am Kragen konvexe Vorsprünge auszubilden, die mit dem Material des Bremsträgers verstemmt werden, wobei das so verstemmte Material in eine konkave Ausnehmung an der Mantelaußenfläche des zylindrischen Vorsprungs des Führungsholms einfließt und so den Führungsholm am Bremsträger axial sichert.

Die Druckschriften EP 0 046 432 A2, US 2013/126280 A1 und DE 102013114899 A1 offenbaren Scheibenbremsen, bei denen ein Führungsholm zur Gleitführung eines Bremssattels mithilfe einer Schraube am Bremsträger festgelegt sind.

Aus der nachveröffentlichten EP 3101301 A1 ist eine Scheibenbremse bekannt, bei der der Führungsholm einen Ansatz mit einem abgeflacht ausgebildeten Segment zur Drehfixierung des Führungsholmes relativ zum Bremsträger aufweist.

Der Erfindung liegt die Aufgabe zugrunde, eine Scheibenbremse der gattungsgemäßen Art so weiterzuentwickeln, dass deren Funktions- und Betriebssicherheit mit geringem konstruktivem Aufwand verbessert wird.

Diese Aufgabe wird durch eine Scheibenbremse mit den Merkmalen des Anspruchs 1 gelöst.

Eine erste Ausführungsvariante einer erfindungsgemäßen Scheibenbremse für ein Nutzfahrzeug weist einen eine Bremsscheibe übergreifenden Bremssattel auf, der an mindestens einem, mit einem ortsfesten Bremsträger mittels einer Schraube verbundenen Führungsholm verschiebbar gehalten ist. Die Schraube ist durch den Führungsholm geführt. Der Führungsholm weist an seiner am Bremsträger anliegenden Stirnfläche zumindest in einem umfänglichen und/oder radialen Teilbereich angeformte, als Verzahnung ausgebildete Prägeelemente auf, die unter Bildung eines Formschlusses eingeprägt in den Bremsträger eingreifen, wobei die Prägeelemente eine größere Härte aufweisen als der Bremsträger im Anlagebereich des Führungsholms.

Alternativ oder zusätzlich weist eine Anlagefläche des Bremsträgers, an der die Stirnfläche des Führungsholmes anliegt, zumindest in einem umfänglichen und/oder radialen Teilbereich angeformte Prägeelemente auf, die unter Bildung eines Formschlusses und/oder eines Reibschlusses eingeprägt in die Stirnfläche des Führungsholmes eingreifen, wobei die Prägeelemente eine größere Härte aufweisen als die Stirnfläche des Führungsholmes im Anlagebereich des Bremsträgers.

Die Prägeelemente sind dabei als geordnet oder ungeordnet verteilte Spitzen oder Kanten mit gleicher oder ungleicher Höhe ausgebildet.

Weitere vorteilhafte Ausbildungen der Erfindung sind in den Unteransprüchen gekennzeichnet.

In einer zweiten Ausführungsvariante einer erfindungsgemäßen Scheibenbremse weist der Führungsholm einen Ansatz auf, der in einer an den Ansatz angepassten Ausnehmung des Bremsträgers unter Bildung eines Formschlusses drehfest aufgenommen ist.

In einer dritten Ausführungsvariante einer erfindungsgemäßen Scheibenbremse ist die an der am Bremsträger anliegende Stirnfläche des Führungsholmes und eine Ausnehmung des Bremsträgers zur Aufnahme zumindest der Stirnfläche des Führungsholmes kegelmantelförmig ausgebildet.

Durch die erfindungsgemäße Ausgestaltung der Scheibenbremse wird nun eine Sicherung des Führungsholms erreicht, die unabhängig ist von der Beschichtung der aneinander liegenden Oberflächen des Führungsholms einerseits und des Bremsträgers andererseits und durch die die Vorspannung der Schraube auch dann unverändert erhalten bleibt, wenn betriebsbedingte Biegebeanspruchungen auf den Führungsholm einwirken, insbesondere durch die beschriebenen Verformungen aufgrund auftretender Belastungen. In jedem Fall ist auszuschließen, dass sich die Schraubverbindung löst, wodurch die zum Stand der Technik beschriebenen Probleme nicht auftreten.

Die stirnseitigen Prägeelemente des Führungsholms, die, gemäß der Erfindung, zumindest in einem umfänglichen und/oder radialen Teilbereich der Stirnfläche ausgebildet sind, können bevorzugt als Verzahnung, vorzugsweise Planverzahnung eingebracht sein, bevor der Führungsholm in diesem Bereich gehärtet wird.

Demgegenüber ist der Bremsträger an der Kontaktseite mit dem Führungsholm insoweit unbehandelt bzw. unbearbeitet, d.h., das Material des Bremsträgers ist deutlich weicher als das gehärtete Material des Führungsholms. Damit prägen sich die stirnseitigen Prägeelemente bzw. die gebildeten Zähne, Kanten oder Spitzen des Führungsholms durch den Schraubdruck während der Verschraubung in die gegenüberliegende Stoßfläche des Bremsträgers ein, so dass sich erfindungsgemäß ein Formschluss und/oder Reibschluss ergibt.

Die Prägeelemente in einem radialen Teilbereich der Stirnfläche können in einem umfänglichen inneren und/oder äußeren Kreisring vorliegen, wobei angrenzend eine Planfläche ausgebildet ist, die gegenüber den Prägeelementen in axialer Richtung erhaben oder abgesetzt ist, d.h., in diesem Fall stehen die Prägeelemente gegenüber der Planfläche vor. In einer bevorzugten Ausführungsform liegen die Prägeelemente in dem äußeren Kreisring vor.

Denkbar ist auch, umfängliche Teilbereiche der Stirnseite in Segmentbereichen abwechselnd als Planflächen auszubilden oder mit Prägeelementen zu versehen, wobei bevorzugt die Segmentbereiche im gleichen Winkelabstand zueinander angeordnet sind. Dabei sind jeweils mindestens drei Segmentbereiche vorgesehen, d.h., drei Segmentbereiche als Planflächen ausgebildet und jeweils zwischen zwei solchen Planflächen ein Segmentbereich mit Prägeelementen .

Diese Planfläche stellt bzw. Planflächen stellen eine exakt rechtwinklige Positionierung des Führungsholms zum Bremsträger sicher und bestimmt letztendlich die Eingrabungstiefe der Prägeelemente, da sich diese in die Anlagefläche des Bremsträgers so weit eindrücken, bis die Planfläche des Führungsholms am Bremsträger anliegt.

Die Prägeelemente als dreidimensionale Strukturen können über verschiedene Verfahren hergestellt werden. Beispielhaft seien hier Rollieren, Rändeln, Rollwalzen, Pressen, Walzfräsen, Ziehen, Hauen, Tiefziehen, Lasern, Erodieren, Prägen oder Strahlen erwähnt. Mit Ausnahme des Strahlens wird eine definierte Struktur erzeugt. Beim Strahlen hingegen kann mit aggressivem, insbesondere eckigem Granulat eine hohe Rauigkeit erzeugt werden, deren Spitzen die Prägeelemente darstellen.

Die in geordneter Struktur vorliegenden Prägeelemente können durch Rändeln mit radial verlaufenden Riefen, Linksrändel, Rechtsrändel, Links-Rechtsrändel mit erhöhten Spitzen (Fischhaut), Links-Rechtsrändel mit vertieften Spitzen, Kreuzrändel mit erhöhten Spitzen oder Kreuzrändel mit vertieften Spitzen hergestellt sein. In unterschiedlichen Bereichen können die Prägeelemente unterschiedlich strukturiert sein, wobei Riefen eine unsymmetrische Kerbgeometrie aufweisen können.

Wie erwähnt, werden die Prägeelemente vor einem Härten des Führungsholms, einschließlich der Stirnfläche, hergestellt. Dies kann durch spanende Bearbeitung erfolgen. Die Anzahl und Form der Prägeelemente ist entsprechend der auftretenden Belastung sowie des jeweiligen Anwendungsfalls festzulegen, wobei die Höhe der Prägeelemente gleich groß oder unterschiedlich sein kann.

Zur Herstellung des Führungsholms wird in einem ersten Verfahrensschritt die Durchgangsbohrung zur Aufnahme der Schraube durch Bohren oder Fräsen eingebracht. Bevorzugt erfolgt dies in einem Schritt mittels eines Stufenbohrers. In einem folgenden Verfahrensschritt wird die Außenkontur des Führungsholms spanend hergestellt, insbesondere durch Drehen, wobei die Maßhaltigkeit der Stirnseite hergestellt wird.

Diese Stirnseite erstreckt sich zunächst über den gesamten, einen Außenring bildenden Flächenbereich der Stirnseite, der nachfolgend derart bearbeitet wird, dass er zum einen die Profil-Prägeelemente aufweist und zum anderen die Planfläche bildet.

Nach dieser spanenden Bearbeitung durch Drehen erfolgt das Einbringen der Profil-Prägeelemente, beispielsweise mit einem rotierenden, insbesondere zylindrischen Werkzeug, z.B. einem Rändelwerkzeug. Danach erfolgt die Härtung des Führungsholms zumindest indem die Prägeelemente aufweisenden Stirnseitenbereich.

Alternativ wird die zylindrische Außenfläche, d.h. Mantelfläche, des Führungsholms beispielsweise induktiv gehärtet. In einer weiteren alternativen Ausführungsform kann der Führungsholm oder die Stirnseite des Führungsholms beispielsweise einsatzgehärtet oder presshart sein.

Denkbar ist auch eine Fertigung des Führungsholms und der Prägeelemente durch spanlose Fertigungsverfahren, beispielsweise durch Umformung, letzteres beispielsweise durch Kalt-Fließpressen oder dergleichen.

Die Erfindung zeichnet sich überdies durch ihre kostengünstige Realisierung aus, zumal, zur Sicherung des Führungsholms gemäß zahlreichen Ausführungsvarianten der Erfindung keine weiteren Bauteile erforderlich sind. Dabei sind besondere Anpassungsmaßnahmen gleichfalls nicht notwendig, insbesondere nicht am Bremsträger, der gegenüber einem bereits im Einsatz befindlichen unverändert bleiben kann. Dies bedeutet, dass beispielsweise bei Instandhaltungs- bzw. Reparaturarbeiten der neue Führungsholm gegen einen vorhandenen ausgetauscht werden kann, ohne dass hierzu besondere Maßnahmen erforderlich wären.

In einer Weiterbildung der oben erwähnten zweiten Ausführungsvariante einer erfindungsgemäße Scheibenbremse, bei der der Führungsholm einen Ansatz aufweist, der in einer an den Ansatz angepassten Ausnehmung des Bremsträgers unter Bildung eines Formschlusses drehfest aufgenommen ist, ist eine Mantelaußenfläche des Ansatzes des Führungsholms und eine Mantelinnenfläche der Ausnehmung des Bremsträgers polygonförmig, beispielsweise als Vierkant oder Sechskant ausgebildet.

In einer weiteren alternativen Ausführungsvariante sind die Mantelaußenfläche des Ansatzes und eine Mantelinnenfläche der Ausnehmung des Bremsträgers teilringförmig ausgebildet. Dabei sind besonders bevorzugt ein Segment der Mantelaußenfläche des Ansatzes und ein Segment der Mantelinnenfläche der Ausnehmung des Bremsträgers als sogenannte Schlüsselfläche abgeflacht geformt.

Durch die formschlüssige Aufnahme des Ansatzes im Bremsträger ist ebenfalls in einfacher Weise eine drehfeste Sicherung des Führungsholms relativ zum Bremsträger erreicht.

Nach einer nochmals alternativen Ausführungsvariante ist anstelle der Ausnehmung des Bremsträgers zur Aufnahme des Ansatzes des Führungsholms auf einem mit einem abgeflachten Segment ausgebildeten Ansatz ein auf den Bremsträger aufliegender Verdrehsicherungsring aufgesetzt, welcher eine sich zur Schraube parallel erstreckende Bohrung aufweist, in der ein den Verdrehsicherungsring relativ zum Bremsträger gegen Verdrehen sichernder Stift aufgenommen ist, der sich in eine entsprechende Bohrung im Bremsträger erstreckt.

Diese Ausführungsvariante zeichnet sich dadurch aus, dass am Bremsträger lediglich eine Bohrung zur Aufnahme des Stiftes angebracht werden muss, um damit eine drehfeste Sicherung des Führungsholms relativ zum Bremsträger zu erreichen.

Nach einer weiteren bevorzugten Ausführungsvariante ist ein Segment der Mantelaußenfläche des Ansatzes und ein Segment der Mantelinnenfläche der Ausnehmung des Bremsträgers mit einer Aufnahme versehen, in der eine Passfeder eingelegt ist.

Denkbar ist auch, zur Verdrehsicherung an wenigstens einem Teilbereich der Mantelaußenfläche des Ansatzes Prägeelemente anzuformen, die unter Bildung eines Formschlusses und/oder eines Reibschlusses eingeprägt in den Bremsträger eingreifen. Die Prägeelemente sind dabei besonders bevorzugt als Rändelung oder Verzahnung ausgebildet.

Betreffend die oben erwähnte dritte Ausführungsvariante einer erfindungsgemäßen Scheibenbremse, bei der eine am Bremsträger anliegende Stirnfläche des Führungsholms und eine Ausnehmung des Bremsträgers zur Aufnahme zumindest der Stirnfläche des Führungsholms kegelmantelförmig ausgebildet ist, ist die Stirnfläche des Führungsholms bevorzugt zur Schraube hin ansteigend ausgebildet.

Dadurch wird eine verbesserte Zentrierung des Führungsholms erreicht sowie eine Vergrößerung der Auflagefläche der Stirnfläche des Führungsholms am Bremsträger.

Alternativ ist die Stirnfläche des Führungsholms zur Schraube hin abfallend ausgebildet. Dadurch ist ein sicheres Aufliegen eines Außenrandes des Führungsholms auf der Oberfläche des Bremsträgers gewährleistet.

Alternativ oder zusätzlich ist es denkbar, den Führungsholm und/oder die Schraube mit dem Bremsträger zu verkleben.

Alternativ oder zusätzlich ist es des Weiteren denkbar, den Führungsholm an seiner am Bremsträger anliegenden Stirnfläche mit einer Diamantsprühbeschichtung zu versehen, um den Reibungskoeffizienten zwischen Führungsholm und Bremsträger weiter zu erhöhen.

Nach einer weiteren bevorzugten Ausführungsvariante ist zur Verhinderung eines Lösens des Führungsholms von dem Bremsträger zwischen einem Schraubenkopf der Schraube und einer Auflagefläche des Schraubenkopfes im Führungsholm ein Gleitring angeordnet.

Dadurch ist eine Drehung des Führungsholms ermöglicht, ohne die Schraube vom Bremsträger zu lösen.

In einer nochmals alternativen Ausführungsvariante ist zur Verhinderung eines Lösens der Schraube die Bohrung im Führungsholm, in dem die Schraube aufgenommen ist, exzentrisch zur Drehachse des Führungsholms verschoben. Die Distanz zwischen diesen beiden Achsen beträgt dabei bevorzugt mehr als 1,5 mm, besonders bevorzugt mehr als 3 mm.

Ausführungsbeispiele der Erfindung werden nachfolgend anhand der beigefügten Zeichnungen beschrieben.

Es zeigen:
- Figur 1: einen Teilausschnitt einer erfindungsgemäßen Scheibenbremse in einer geschnittenen Draufsicht;
- Figur 2: einen Bremsträger der Scheibenbremse als Einzelheit in einer perspektivischen Ansicht;
- Figur 3: einen Führungsholm der Scheibenbremse in einem perspektivischen Teilausschnitt, gemäß der Angabe III in Figur 2;
- Figuren 4a-e: unterschiedliche Darstellungen einer Ausführungsvariante eines Führungsholms der Scheibenbremse vor dem Einbringen der Prägeelemente;
- Figur 5: eine Detailansicht eines Teilausschnitts des Führungsholms gemäß der Angabe V in Figur 4d);
- Figur 6: eine Detailansicht eines Teilausschnitts des Führungsholms aus Figur 4 gemäß der Angabe VI in Figur 4b);
- Figuren 7-11: den Figuren 4-6 entsprechende Darstellungen einer Ausführungsvariante eines Führungsholms nach dem Einbringen der hier als Spitzverzahnung ausgebildeten Prägeelemente,
- Figur 12: eine perspektivische Ansicht auf den mit Prägeelementen versehenen Teil einer alternativen Ausführungsvariante eines Führungsholms mit einer Spitzverzahnung mit abgeschrägten Stirnseiten;
- Figur 13: eine Seitenansicht auf die Verzahnung des Führungsholms gemäß Figur 12;
- Figuren 14 und 15: weitere Detaildarstellungen der Verzahnung des Führungsholms gemäß Figur 12;
- Figur 16: eine perspektivische Darstellung einer weiteren Ausführungsvariante eines Führungsholms mit die gesamte Stirnfläche des Führungsholms einnehmenden Prägeelementen;
- Figur 17: eine Ansicht eines Längsschnitts durch den in Figur 16 gezeigten Führungsholm;
- Figuren 18 und 19: vergrößerte Darstellungen der Verzahnung des in Figur 16 gezeigten Führungsholms;
- Figur 20: eine perspektivische Ansicht eines Längsschnitts einer weiteren Ausführungsvariante eines Führungsholms mit Spitzverzahnung im radial äußeren Bereich der Stirnfläche;
- Figur 21: eine der Figur 20 entsprechende Darstellung einer weiteren Ausführungsvariante eines Führungsholms mit radial mittig angeordneter Spitzverzahnung;
- Figur 22: eine perspektivische Ansicht eines Ausschnitts einer weiteren Ausführungsvariante eines Führungsholms mit in einem radialen und umfänglichen Teilbereich angeformten Prägeelementen;
- Figur 23: eine Schnittansicht eines an einem Bremsträger festgelegten Führungsholms mit an dem Bremsträger verklebtem Führungsholm;
- Figur 24: eine perspektivische Ansicht eines Ausschnitts einer weiteren Ausführungsvariante eines Führungsholms mit teilringförmigem Ansatz mit Schlüsselfläche;
- Figur 25: eine perspektivische Ansicht eines Ausschnitts einer weiteren alternativen Ausführungsvariante eines Führungsholms mit teilringförmigem Ansatz mit einer Aufnahme für eine Passfeder;
- Figuren 26 und 27: Schnittansichten durch an einem Bremsträger festgelegte weitere Ausführungsvarianten von Führungsholmen mit kegelmantelförmig ausgebildeter Stirnfläche des Führungsholms und entsprechend geformter Aufnahme des Bremsträgers;
- Figur 28: eine perspektivische Ansicht eines Ausschnitts einer weiteren Ausführungsvariante eines Führungsholms, bei dem die Mantelfläche eines Ansatzes mit einer Rändelung versehen ist;
- Figur 29: eine perspektivische Ansicht eines auf einen Ansatz mit Schlüsselfläche aufsetzbaren Verdrehsicherungsringes;
- Figur 30: eine perspektivische Ansicht eines Ausschnitts einer weiteren Ausführungsvariante eines Führungsholms mit exzentrisch zur Drehachse des Führungsholms angeordneter Aufnahmebohrung zur Aufnahme der Schraube zur Befestigung des Führungsholms am Bremsträger; und
- Figur 31: eine Schnittansicht durch einen an einem Bremsträger festgelegten Führungsholm in einer weiteren Ausführungsvariante, bei der zwischen dem Schraubenkopf und einer Anlagestufe im Führungsholm ein Gleitring angeordnet ist.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, des Bremsträgers, des Führungsholmes, der Prägeelemente und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

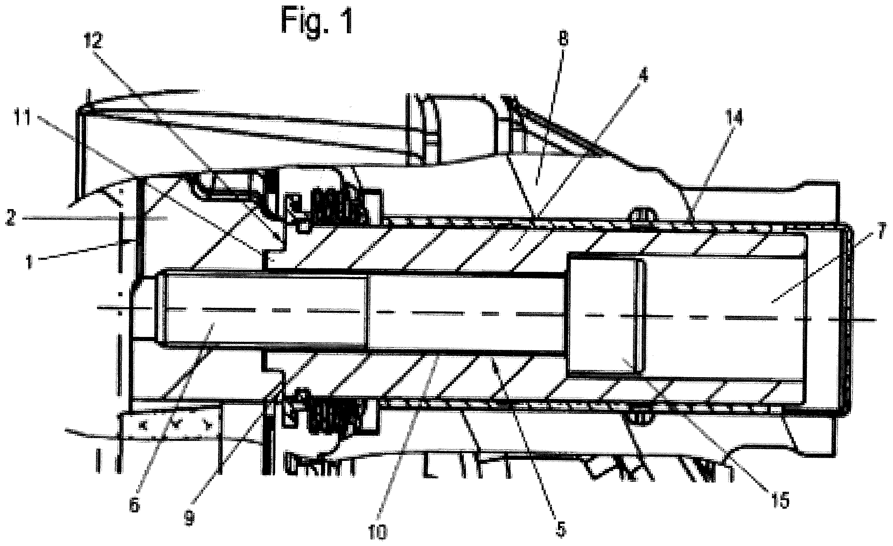

In der Figur 1 ist ein Teilbereich einer erfindungsgemäßen Scheibenbremse für ein Nutzfahrzeug abgebildet, in dem ein eine Bremsscheibe übergreifender Bremssattel 8 mittels eines Führungsholms 4 an einem ortsfesten, d.h. fahrzeugseitigen Bremsträger 1 verschieblich gehalten ist. Der Führungsholm 4 ist mit einem ortsfesten Bremsträger 1 mittels einer Schraube 5 verbunden. Die Schraube 5 ist dabei durch den Führungsholm 4 geführt.

Der Führungsholm 4 weist an seiner am Bremsträger 1 anliegenden Stirnfläche 9 zumindest in einem umfänglichen und/oder radialen Teilbereich angeformte Prägeelemente 12 auf, die unter Bildung eines Formschlusses und/oder eines Reibschlusses eingeprägt in den Bremsträger 1 eingreifen.

Der Führungsholm 4, im Beispiel mit einer Länge von 100 bis 120 mm und einem Außendurchmesser von 30 bis 40 mm, ist Bestandteil eines Axial-Gleitlagers und ist in einer verschiebegesichert im Bremssattel 8 gehaltenen Gleitbuchse 14 geführt.

Der Führungsholm 4 ist hier mit einer als Kopfschraube ausgebildeten Schraube 5 am Bremsträger 1 gehalten, wobei ein Gewindeschaft 6 der Schraube 5 in eine Gewindebohrung eines Bremsträgerhorns 2 eingedreht ist. Der Kopf 15 der durch eine Axialbohrung 10 des Führungsholms 4 geführten Schraube 5 stützt sich am Grund einer Senkung 7 des Führungsholms 4 ab. Die Senkung 7 ist zum Schutz vor Verschmutzung bevorzugt mit einer Schutzabdeckung 34 überdeckt. Die Schutzabdeckung 34 ist dabei vorzugsweise als Schutzkappe ausgebildet, die auf das Ende des Führungsholms 4 aufsteckbar oder aufschraubbar ist.

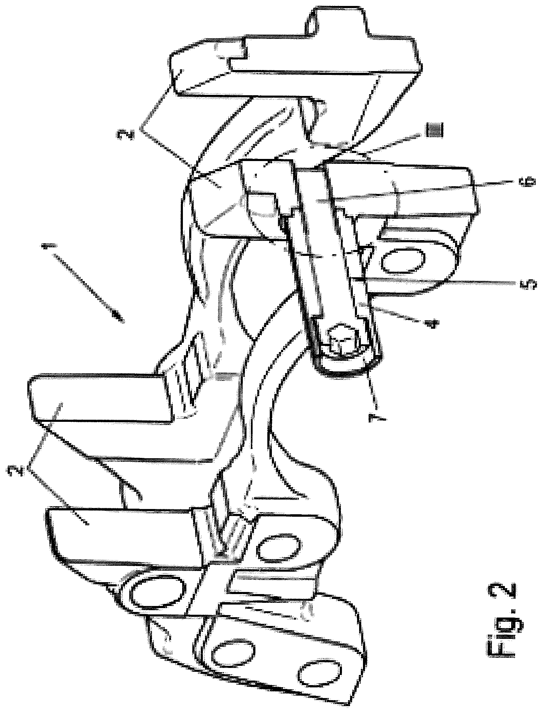

In der Figur 2, die den Bremsträger 1 als Einzelheit wiedergibt, mit einem angeschlossenen Führungsholm 4, ist ebenso wie in der Figur 1 zu erkennen, dass der Führungsholm 4 stirnseitig an dem Bremsträger 1 anliegt, wobei der Führungsholm 4 einen konzentrischen Ansatz 11 aufweist, der in eine daran angepasste Ausnehmung des Bremsträgers 1 eingesteckt ist.

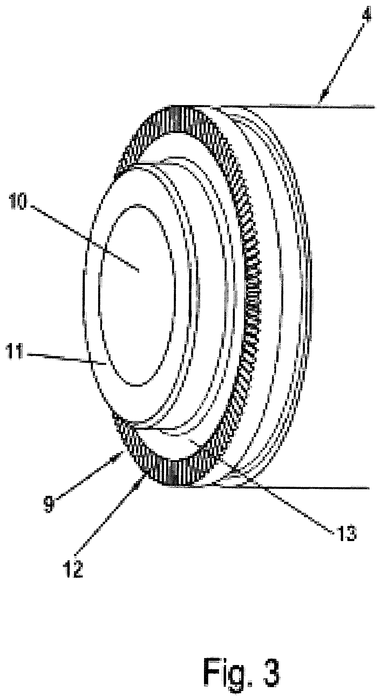

Die Figur 3 zeigt in vergrößerter Ansicht einen Abschnitt des Führungsholms 4. Eine radial zum Ansatz 11 außenseitig benachbarte umlaufende Ringfläche bildet die Stirnfläche 9 des Führungsholms 4, die in einem umfänglichen äußeren Randbereich mit Prägeelementen 12 in Form einer Verzahnung versehen ist, während sich benachbart dazu hin zum Ansatz 11 eine Planfläche 13, gleichfalls konzentrisch verlaufend, erstreckt. Gegenüber den Prägeelementen 12 liegt diese Planfläche 13 vertieft, wobei die Prägeelemente 12 etwa 0,07 bis 0,11 mm hoch sein können.

Die Anordnung der Verzahnung ist besonders deutlich in der Figur 3 erkennbar. Darin ist auch zu erkennen, dass die Prägeelemente 12 aus radial ausgerichteten, im Querschnitt jeweils eine gleichschenklige Kontur beschreibenden Zähnen bestehen.

Gemäß der Erfindung sind die Prägeelemente 12 in befestigter, also montierter Stellung des Führungsholms 4 unter Bildung eines Formschlusses in die zugeordnete Anlagefläche des Bremsträgers 1 eingeprägt.

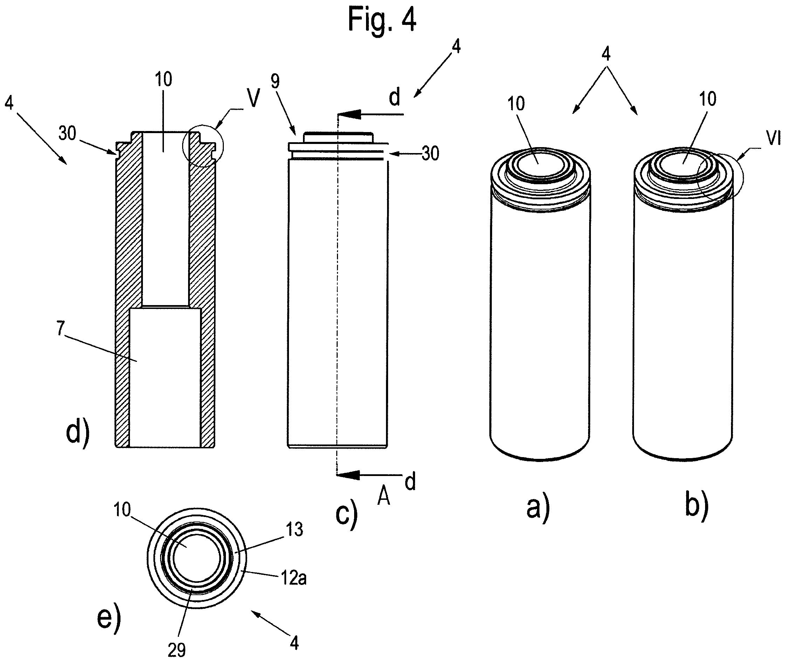

Die Figuren 4 bis 6 zeigen eine Vorstufe einer Ausführungsvariante eines erfindungsgemäßen Führungsholms 4 vordem Einbringen der Prägeelemente 12 auf eine dazu vorgesehene Prägeringfläche 12a der Stirnfläche 9 des Führungsholms 4.

Die Figuren 4a und 4b zeigen dabei den Führungsholm 4 in einer perspektivischen Darstellung, während Figur 4c den Führungsholm 4 in einer Seitenansicht zeigt. Die Figur 4d zeigt eine Schnittdarstellung des Führungsholms 4 durch eine in Figur 4c mit dem Buchstaben d bezeichnete Schnittfläche. Gut zu erkennen in Figur 4d ist dabei die zentral im Führungsholm 4 sich erstreckende Axialbohrung 10 zur Aufnahme der Schraube 5 und des aufgeweiteten Bereichs der Axialbohrung zur Aufnahme des Kopfes 15 der Schraube 5 in der Senkung 7.

Figur 4e zeigt eine Draufsicht auf den Führungsholm 4 gemäß Figur 4a.

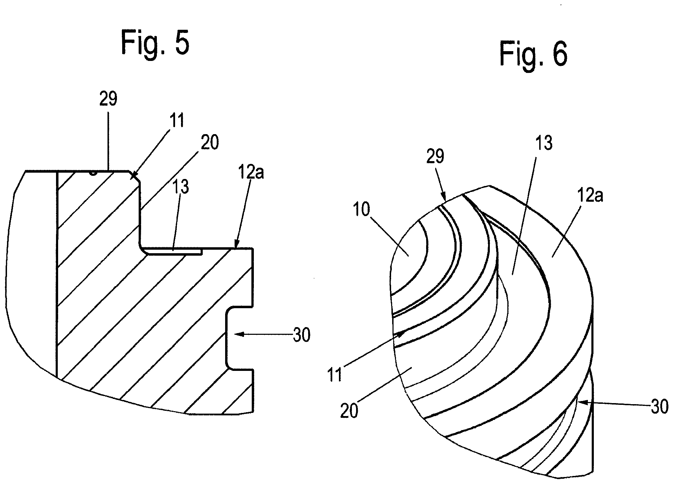

Die Figur 5 zeigt einen Detailausschnitt des Führungsholms 4 eines in Figur 4d mit V bezeichneten Ausschnitts. Entsprechend zeigt Figur 6 diesen Ausschnitt in einer perspektivischen Darstellung, wie er in Figur b mit VI bezeichnet ist.

Wie insbesondere in den Figuren 5 und 6 gut erkennbar ist, ist der Ringabschnitt 12a, in dem in einem anschließenden spanenden Verfahren die Prägeelemente 12 eingebracht werden, geringfügig erhaben gegenüber der in dieser Ausführungsvariante radial weiter innen liegenden Planfläche 13 der Stirnfläche 9 des Führungsholms 4.

Radial weiter innen ist der Ansatz 11 mit seiner Mantelfläche 20 und einer Stirnfläche 29 dargestellt. Denkbar ist auch, in die Stirnfläche 29 des Ansatzes 11 Prägeelemente 12 einzubringen, die unter Bildung eines Formschlusses in eine zugeordnete Anlagefläche des Bremsträgers 1 beim Anziehen der Schraube 5 eingeprägt werden.

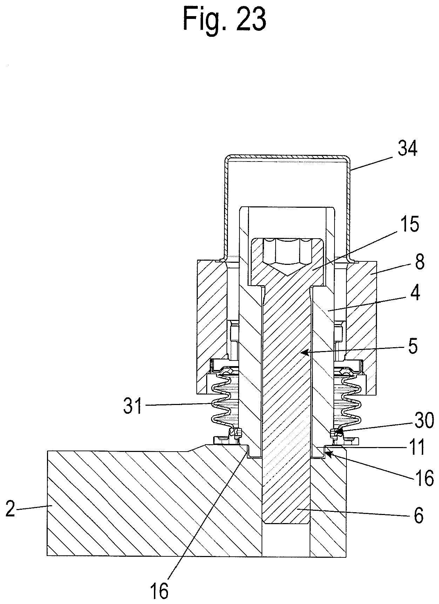

Axial unterhalb der Prägeelemente 12 ist in die Mantelfläche des Führungsholms 4 eine Nut 30 eingebracht, die der Aufnahme eines Dichtelementes 31, insbesondere eines Endes eines Faltenbalges dient, wie es beispielsweise in den Figuren 1 oder 23 gezeigt ist. Das andere Ende des hier als Faltenbalg ausgebildeten Dichtelements 31 ist in einer Aussparung des Bremssattels 8 festgelegt, in der der Führungsholm 4 gelagert ist.

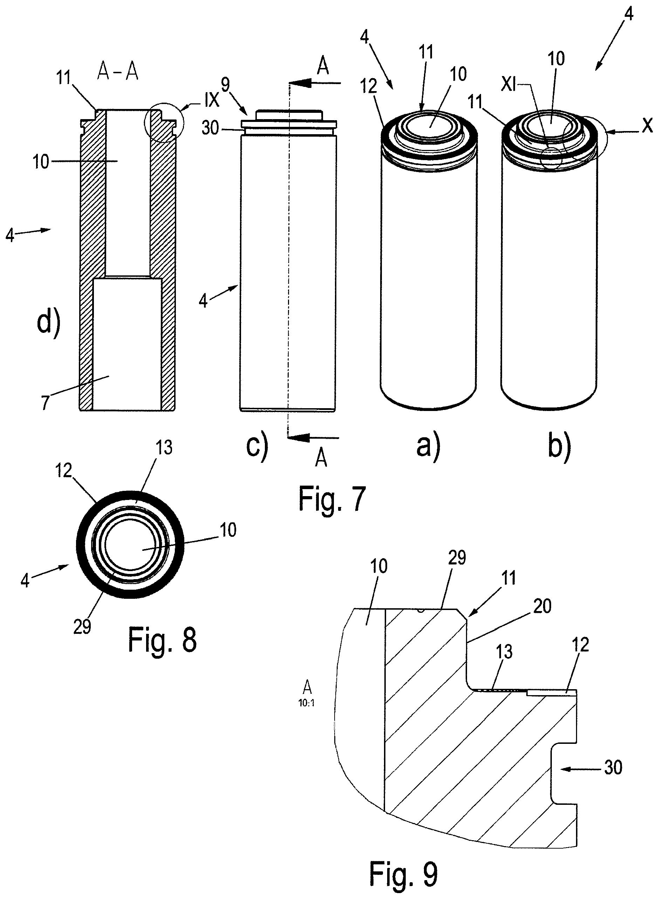

Die Figuren 7 bis 9 zeigen den anhand der Figuren 4 bis 6 beschriebenen Führungsholm 4 in einem Zustand, bei dem die Ringfläche 12a fertig bearbeitet mit hier geordnet verteilten Kanten zur Ausbildung der Prägeelemente 12 bearbeitet ist.

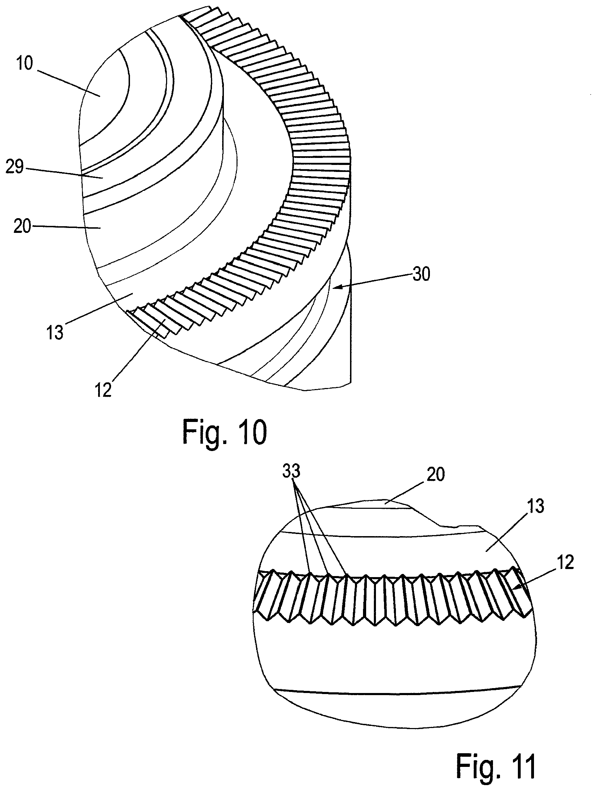

Die Prägeelemente 12 sind vorzugsweise, wie in den Figuren 10 und 11 dargestellt ist, als Keilverzahnung ausgebildet. Die einzelnen Zähne 33 dieser als Keilverzahnung ausgebildeten Prägeelemente 12 sind hier mit radial zur Längsachse des Führungsholms 4 verlaufenden Kanten mit gleicher Höhe ausgebildet. Der in Figur 10 gezeigte Detailausschnitt entspricht dabei dem in Figur 7b mit X bezeichneten Ausschnitt. Der in Figur 11 gezeigte Detailausschnitt entspricht dem in Figur 7b mit XI bezeichneten Ausschnitt des Führungsholms 4.

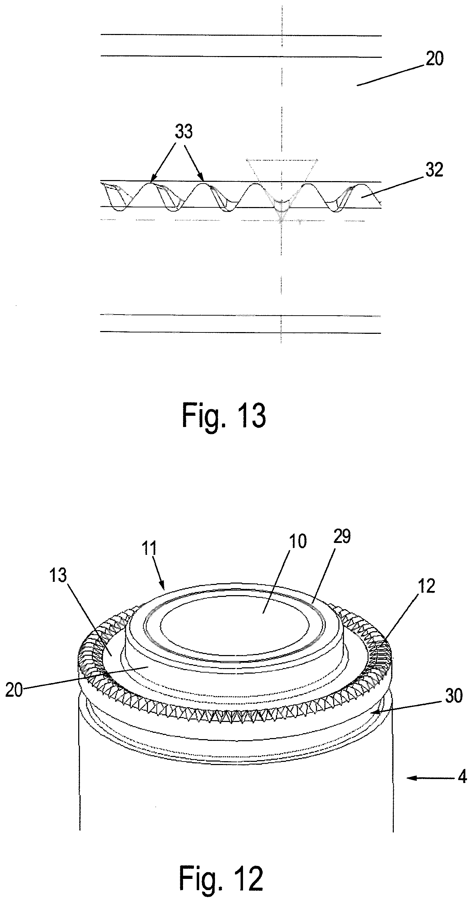

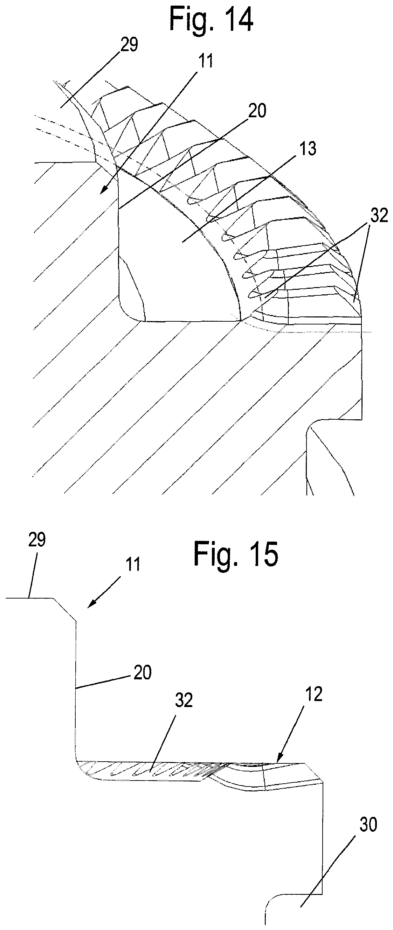

Bei der in den Figuren 12 bis 15 gezeigten Ausführungsvariante sind die Prägeelemente 12 ebenfalls als ringförmig angeordnete Verzahnung 12 ausgebildet. Hier sind die radiale Erstreckung der Basis der einzelnen Zähne länger als die oberen Kanten der einzelnen Zähne. Die Stirnflächen 32 der einzelnen Zähne 33 der Prägeelemente 12 sind hier dementsprechend angeschrägt ausgebildet, wodurch sich der wirksame Druck beim Anziehen der Schraube auf die Anlagefläche des Bremsträgers 1 erhöht.

Die Planfläche 13 ist bei der in den Figuren 12 bis 15 gezeigten Ausführungsvariante zwischen dem radial außen liegenden Prägeelementen 12 und dem Ansatz 11 angeordnet.

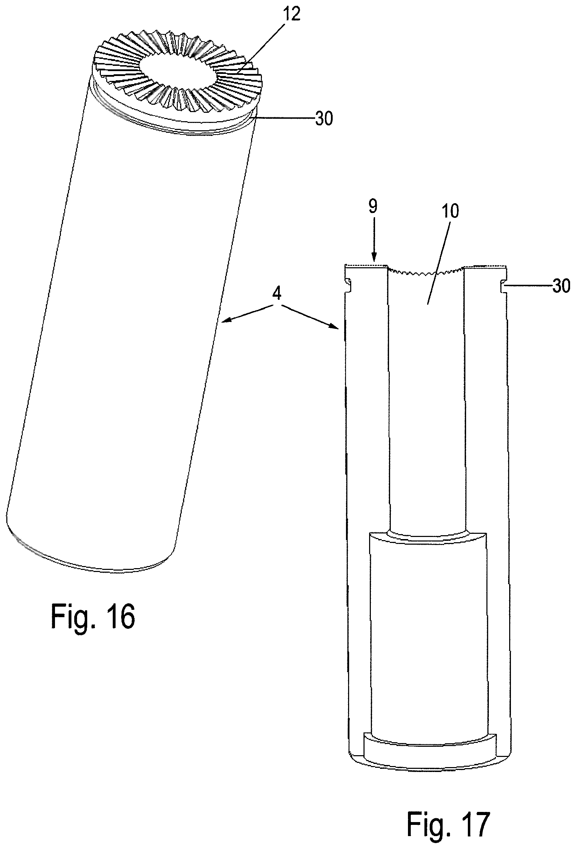

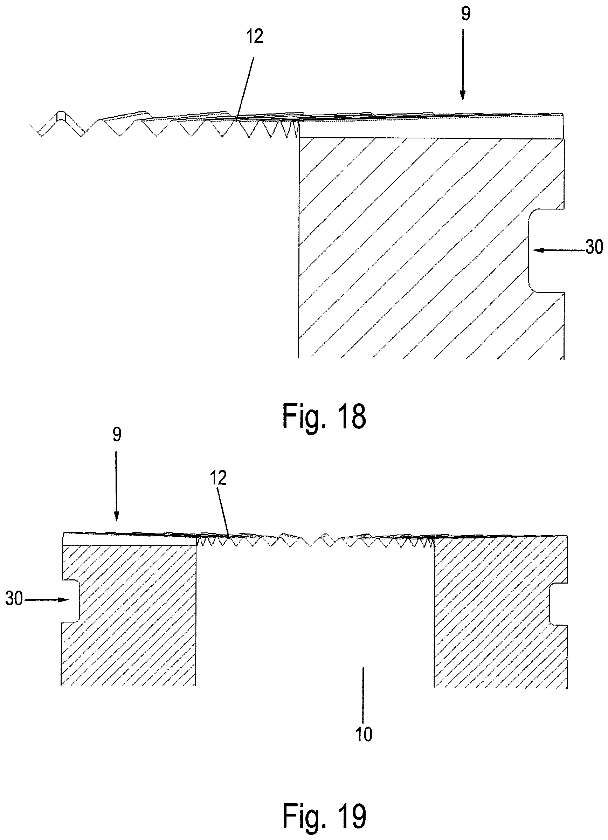

Bei der in den Figuren 16 bis 19 gezeigten weiteren Ausführungsvariante eines erfindungsgemäßen Führungsholms 4 sind die Prägeelemente 12 in einem konzentrischen Ringbereich angeordnet. Die Stirnfläche 9 des Führungsholms 4 ist bei der hier gezeigten Ausführungsvariante vollständig mit Prägeelementen 12 bedeckt. Die Prägeelemente 12 sind hier wiederum als Verzahnung ausgebildet, mit sich radial erstreckenden Kanten, die radial nach außen leicht erhöht ausgebildet sind.

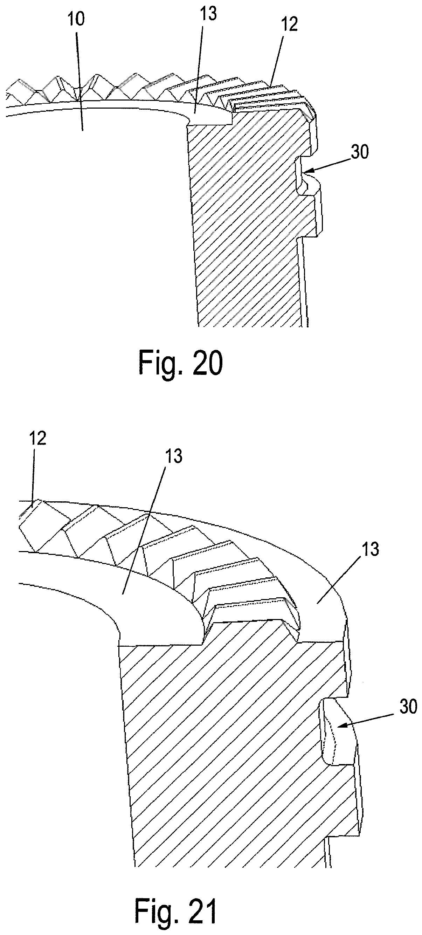

Figur 20 zeigt einen Ausschnitt einer weiteren Ausführungsvariante eines erfindungsgemäßen Führungsholms 4 mit sich von einem umfänglichen Außenrand der Stirnfläche 9 sich radial nach innen erstreckenden Verzahnung ausgebildeten Prägeelementen 12, bei der eine radial weiter innen liegende ringförmige Fläche als Planfläche 13 ausgebildet ist. Die Planfläche 13 schließt bei dieser Ausführungsvariante direkt an die Axialbohrung 10 des Führungsholms 4 zur Aufnahme der Schraube 5 an. Ein sich über die Stirnfläche 9 erhebender Ansatz 11 ist bei diesem Führungsholm 4 nicht vorgesehen.

Denkbar ist auch, wie in Figur 21 gezeigt, zwei konzentrisch angeordnete Planflächen 13 auf der Stirnfläche 9 des Führungsholms 4 vorzusehen, wobei die Prägeelemente 12 zwischen den Planflächen 13 angeformt sind.

Anstelle der Ausbildung mit symmetrischen Zähnen kann die Verzahnung auch als Keilverzahnung ausgebildet sein.

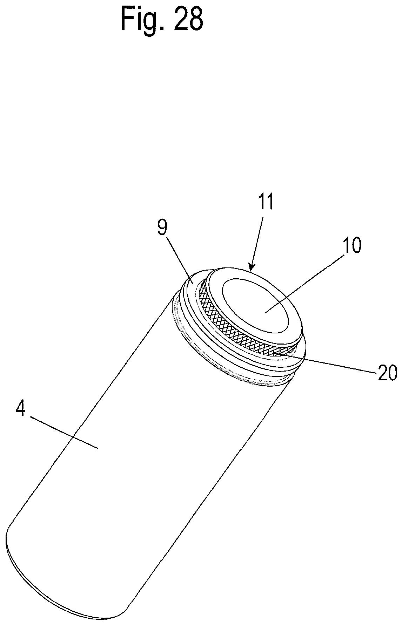

Optional sind die Prägeelemente 12 als geordnet oder ungeordnet verteilte Spitzen oder Kanten mit gleicher oder ungleicher Höhe ausgebildet. Insbesondere sind in einem besonderen Ausführungsbeispiel die Prägeelemente 12 als Rändelung oder Verzahnung ausgebildet, wie beispielsweise in der in Figur 28 gezeigten Ausführungsvariante.

Ferner ist in einem besonderen Ausführungsbeispiel die Planfläche 13 in einem zu den Prägeelementen 12 inneren und/oder äußeren konzentrischen Ringbereich vorgesehen.

Ferner ist in einem besonderen Ausführungsbeispiel die Planfläche 13 gegenüber den Prägeelementen 12 in axialer Richtung vertieft oder steht gegenüber den Prägeelementen 12 vor.

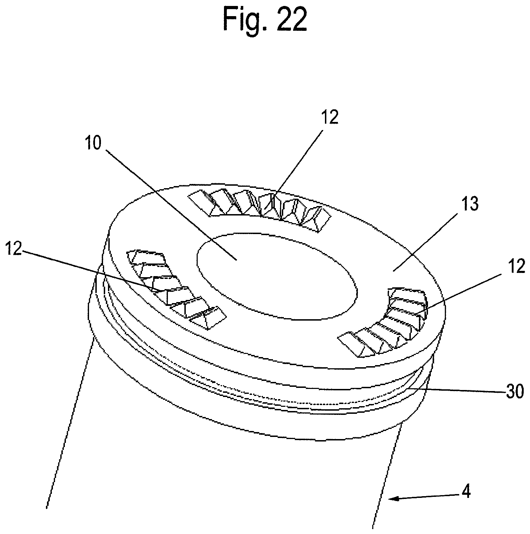

Ferner sind in einem besonderen Ausführungsbeispiel Bereiche mit Prägeelementen 12 und Bereiche mit Planflächen 13 umfänglich abwechseln jeweils als Segmentbereiche ausgebildet, wie es in Figur 22 gezeigt ist.

In dem dort gezeigten Ausführungsbeispiel jeweils mindestens drei Segmentbereiche vorzugsweise in gleichem Winkelabstand zueinander, vorgesehen.

Ferner sind in einem besonderen Ausführungsbeispiel die Verzahnung 12 als Planverzahnung ausgebildet ist, deren Zahnflanken radial ausgerichtet.

Ferner ist in einem besonderen Ausführungsbeispiel die Verzahnung 12 als Keilverzahnung ausgebildet ist.

Ferner weist in einem besonderen Ausführungsbeispiel die Prägeelemente 12 eine größere Härte auf als der Bremsträger 1 im Anlagebereich des Führungsholms 4.

Ferner ist in einem besonderen Ausführungsbeispiel der Führungsholm 4 zumindest im Bereich der Prägeelemente 12 nach deren Einbringen gehärtet.

Denkbar ist auch, die Stirnfläche 9 des Führungsholms 4 mit einem Klebmittel 16 zu benetzen und dadurch den Führungsholm 4 mit dem Bremsträger 1, insbesondere zusätzlich, zu verkleben.

Ebenfalls denkbar ist es, die Stirnseite 9 des Führungsholms 4 mit einer Diamantsprühbeschichtung zu versehen, um die Rauigkeit der Stirnfläche 9 zu erhöhen. Dadurch wird erreicht, dass sich die Diamantsprühbeschichtung beim Anziehen der Schraube 5 am Bremsträger 1 in die Auflagefläche des Bremsträgers 1 eingräbt.

Anstelle der Besprühung mit einer solchen Diamantsprühbeschichtung ist es ebenfalls denkbar, eine Diamantscheibe zwischen die Stirnseite 9 des Führungsholms 4 und die Auflagefläche am Bremsträger 1 einzusetzen. Die Partikelgröße der einzelnen Diamanten ist dabei auf den Werkstoff des Bremsträgers 1 entsprechend abgestimmt.

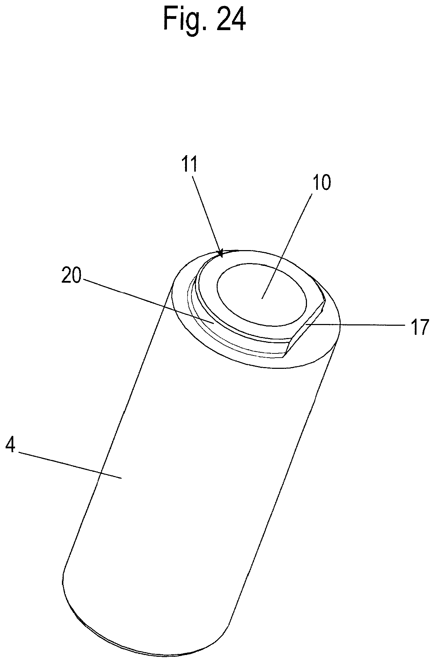

Alternativ oder zusätzlich zur Vorsehung von Prägeelementen 12 an der Stirnfläche 9 des Führungsholms 4 weist in einer in Figur 24 gezeigten alternativen Ausführungsvariante der Führungsholm 4 einen Ansatz 11 auf, der in einer diesem angepassten Ausnehmung des Bremsträgers 1 unter Bildung eines Formschlusses drehfest aufgenommen ist. Bei der in hier gezeigten Ausführungsvariante ist eine Mantelaußenfläche 20 des Ansatzes 11 des Führungsholms 4 und eine Mantelinnenfläche der Ausnehmung des Bremsträgers 1 teilringförmig ausgebildet. Insbesondere ist ein Segment der Mantelaußenfläche 20 des Ansatzes 11 und ein Segment der Mantelinnenfläche der Ausnehmung des Bremsträgers 1 abgeflacht geformt und bildet damit in Drehrichtung der Schraube 5 einen Formschluss des Ansatzes 11 mit der Mantelinnenfläche der Ausnehmung des Bremsträgers 1 aus.

Denkbar ist auch die Mantelaußenfläche 20 des Ansatzes 11 des Führungsholms 4 und die Mantelinnenfläche der Ausnehmung des Bremsträgers 1 polygonförmig, beispielsweise als Vierkant oder Sechskant auszubilden.

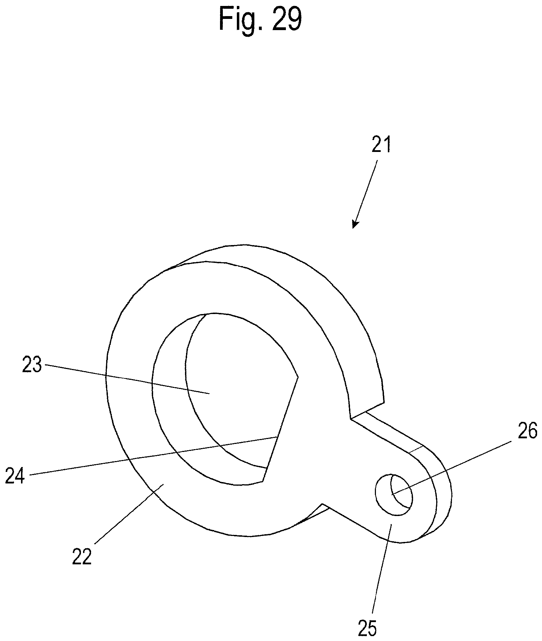

Denkbar ist auch, den Ansatz 11 von einem auf dem Bremsträger 1 aufliegenden Verdrehsicherungsring 21, wie er in Figur 29 gezeigt ist, zu umschließen.

Der Verdrehsicherungsring 21 und der Bremsträger 1 weisen dabei eine zur Schraube 5 parallel sich erstreckende Bohrung 26 auf, an der ein den Verdrehsicherungsring 21 relativ zum Bremsträger 1 gegen Verdrehen sichernder Stift aufgenommen ist.

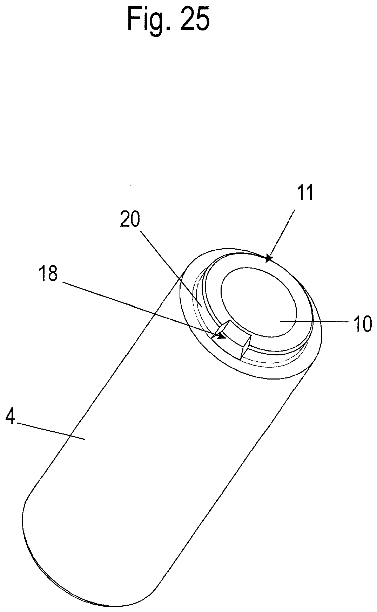

Bei der in Figur 25 gezeigten weiteren Ausführungsvariante weisen ein Segment der Mantelaußenfläche 20 des Ansatzes 11 und ein Segment der Mantelinnenfläche der Ausnehmung des Bremsträgers 1 eine Aufnahme 18 auf, an der eine Passfeder eingelegt ist, die der Verhinderung einer Drehbewegung des Führungsholms 4 um die Drehachse der Schraube 5 dient.

Denkbar ist auch, dass zumindest ein Teilbereich der Mantelaußenfläche 20 des Ansatzes 11 an diesem angeformte Prägeelemente 12 aufweist, die unter Bildung eines Formschlusses und/oder eines Reibschlusses eingeprägt in den Bremsträger 1 eingreifen. Die Prägeelemente 12 sind bei der in Figur 28 gezeigten Ausführungsvariante als Rändelung ausgebildet.

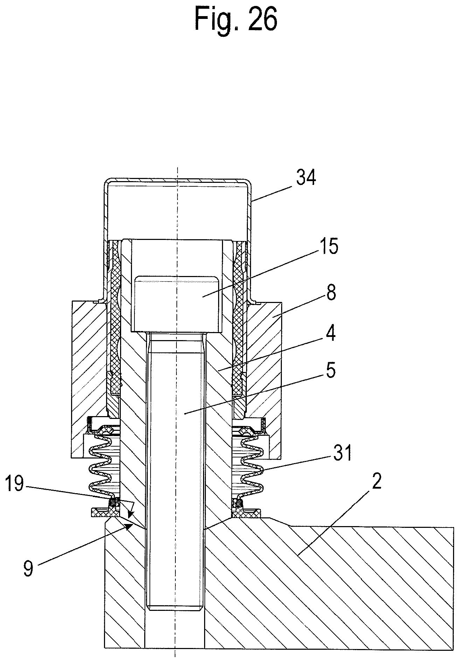

Zur Zentrierung des Führungsholms 4 sowie einer Vergrößerung der Stirnfläche 9 des Führungsholms 4 ist in einer weiteren, in Figur 26 gezeigten Ausführungsvariante eine am Bremsträger 1 anliegende Stirnfläche 9 des Führungsholms 4 und einer Ausnehmung des Bremsträgers 1 zur Aufnahme zumindest der Stirnfläche 9 des Führungsholms 4 kegelmantelförmig ausgebildet.

Bei dieser Ausführungsvariante ist die Stirnfläche 9 des Führungsholms 4 zur Schraube 5 hin ansteigend ausgebildet.

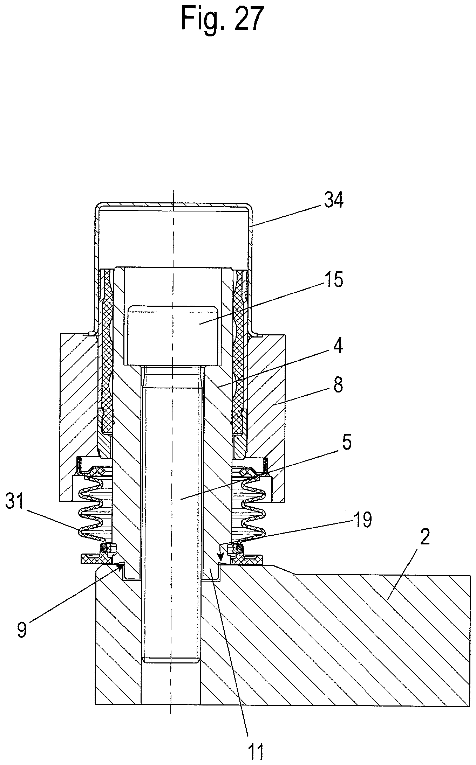

Bei der in Figur 27 gezeigten Ausführungsvariante ist die Stirnfläche 9 des Führungsholms 4 zur Schraube 5 hin abfallend ausgebildet.

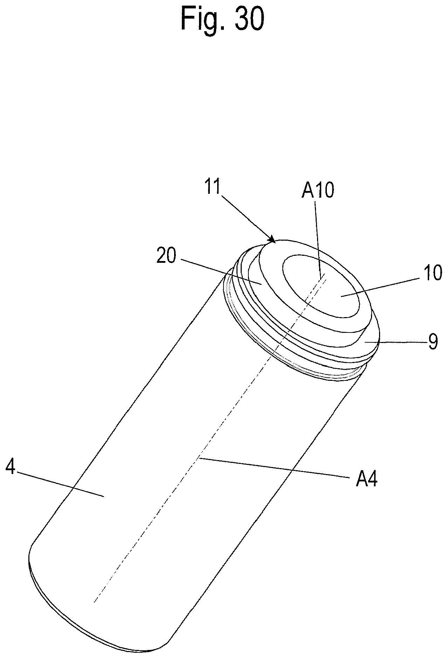

Bei der in Figur 30 gezeigten weiteren Ausführungsvariante eines erfindungsgemäßen Führungsholms 4 ist die Bohrung 10 im Führungsholm 4, in der die Schraube 5 aufgenommen ist, exzentrisch zur Drehachse A₄ des Führungsholms 4 verschoben. Dadurch ist die Drehachse des Führungsholms 4 und die Drehachse A₁₀ der Schraube 5 nicht konzentrisch, was einer Verdrehung des Führungsholms 4 ebenfalls entgegenwirkt. Das Maß der Verschiebung der beiden genannten Achsen beträgt dabei bevorzugt mehr als 1,5 mm, besonders bevorzugt mehr als 3 mm.

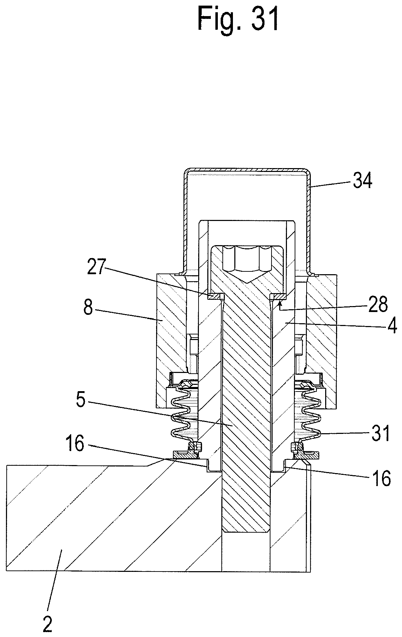

Bei der in Figur 31 gezeigten Ausführungsvariante ist zwischen einem Schraubenkopf 15 der Schraube 5 und einer Auflagefläche 28 des Schraubenkopfes 15 im Führungsholm 4 ein Gleitring 27 angeordnet. Dadurch ist ermöglicht, dass sich der Führungsholm 4 gegenüber dem Bremsträger 1 drehen kann, ohne die Schraubverbindung der Schraube 5 mit dem Bremsträger 1 zu lösen.

### Bezugszeichenliste

- 1: Bremsträger
- 2: Bremsträgerhorn
- 4: Führungsholm
- 5: Schraube
- 6: Gewindeschaft
- 7: Senkung
- 8: Bremssattel
- 9: Stirnfläche
- 10: Bohrung
- 11: Ansatz
- 12: Prägeelement
- 12a: Ring
- 13: Planfläche
- 14: Gleitbuchse
- 15: Kopf
- 16: Klebmittel
- 17: Schlüsselfläche
- 18: Aufnahme
- 19: Anlagefläche
- 20: Mantelaußenfläche
- 21: Verdrehsicherungsring
- 22: Ringkörper
- 23: Durchgangsöffnung
- 24: Schlüsselfläche
- 25: Fortsatz
- 26: Bohrung
- 27: Gleitring
- 28: Auflagefläche
- 29: Stirnfläche
- 30: Nut
- 31: Dichtelement
- 32: Abschrägung
- 33: Zahn
- 34: Schutzabdeckung

- A₄: Drehachse des Führungsholmes
- A₁₀: Zentralachse der Bohrung im Führungsholm

## Patentansprüche

1. Scheibenbremse für ein Nutzfahrzeug,
- mit einem eine Bremsscheibe übergreifenden Bremssattel (8),
- der an mindestens einem, mit einem ortsfesten Bremsträger (1) mittels einer Schraube (5) verbundenen Führungsholm (4) verschiebbar gehalten ist,
- wobei die Schraube (5) durch den Führungsholm (4) geführt ist,
**dadurch gekennzeichnet, dass**
- der Führungsholm (4) an seiner am Bremsträger (1) anliegenden Stirnfläche (9) zumindest in einem umfänglichen oder radialen Teilbereich angeformte, als Verzahnung ausgebildete Prägeelemente (12) aufweist, die unter Bildung eines Formschlusses eingeprägt in den Bremsträger (1) eingreifen, wobei die Prägeelemente (12) eine größere Härte aufweisen als der Bremsträger (1) im Anlagebereich des Führungsholms (4) und/oder
- eine Anlagefläche (19) des Bremsträgers (1), an der die Stirnfläche (9) des Führungsholmes (4) anliegt, zumindest in einem umfänglichen oder radialen Teilbereich angeformte Prägeelemente (12) aufweist, die unter Bildung eines Formschlusses und/oder eines Reibschlusses eingeprägt in die Stirnfläche (9) eingreifen, wobei die Prägeelemente (12) eine größere Härte aufweisen als die Stirnfläche (9) des Führungsholmes (4) im Anlagebereich des Bremsträgers (1),
- wobei die Prägeelemente (12) als geordnet oder ungeordnet verteilte Spitzen oder Kanten mit gleicher oder ungleicher Höhe ausgebildet sind.

2. Scheibenbremse nach Anspruch 1, **dadurch gekennzeichnet, dass** die Prägeelemente (12) der Anlagefläche (19) des Bremsträgers (1) als Rändelung oder Verzahnung ausgebildet sind.

3. Scheibenbremse nach einem der vorhergehenden Ansprüche, **dadurch gekennzeichnet, dass** die Prägeelemente (12) in einem konzentrischen Ringbereich angeordnet sind.

4. Scheibenbremse nach einem der vorhergehenden Ansprüche, **dadurch gekennzeichnet, dass** benachbart zu den Prägeelementen (12) in zumindest einem konzentrischen Teilbereich der Stirnfläche (9) eine Planfläche (13) ausgebildet ist.

5. Scheibenbremse nach Anspruch 4, **dadurch gekennzeichnet, dass** die Planfläche (13) in einem zu den Prägeelementen (12) inneren und/oder äußeren konzentrischen Ringbereich vorgesehen ist.

6. Scheibenbremse nach einem der Ansprüche 4 oder 5, **dadurch gekennzeichnet, dass** die Planfläche (13) gegenüber den Prägeelementen (12) in axialer Richtung vertieft ist oder vorsteht.

7. Scheibenbremse nach einem der Ansprüche 4 bis 6, **dadurch gekennzeichnet, dass** Bereiche mit Prägeelementen (12) und Bereiche mit Planflächen (13) umfänglich abwechselnd jeweils als Segmentbereiche ausgebildet sind

8. Scheibenbremse nach Anspruch 7, **dadurch gekennzeichnet, dass** jeweils mindestens drei Segmentbereiche, vorzugsweise in gleichem Winkelabstand zueinander, vorgesehen sind.

9. Scheibenbremse nach einem der vorhergehenden Ansprüche, **dadurch gekennzeichnet, dass** die Verzahnung (12) als Planverzahnung ausgebildet ist, deren Zahnflanken radial ausgerichtet sind.

10. Scheibenbremse nach einem der vorhergehenden Ansprüche, **dadurch gekennzeichnet, dass** die Verzahnung (12) als Keilverzahnung ausgebildet ist.

11. Scheibenbremse nach einem der vorhergehenden Ansprüche, **dadurch gekennzeichnet, dass** der Führungsholm (4) zumindest im Bereich der Prägeelemente (12) nach deren Einbringen gehärtet ist.

12. Scheibenbremse nach einem der vorhergehenden Ansprüche, **dadurch gekennzeichnet, dass** der Führungsholm (4) einen Ansatz (11) aufweist, der in einer diesem angepassten Ausnehmung des Bremsträgers (1) unter Bildung eines Formschlusses drehfest aufgenommen ist.

13. Scheibenbremse nach Anspruch 12, **dadurch gekennzeichnet, dass** eine Mantelaußenfläche (20) des Ansatzes (11) des Führungsholmes (4) und eine Mantelinnenfläche der Ausnehmung des Bremsträgers (1) polygonförmig ausgebildet sind.

14. Scheibenbremse nach Anspruch 12, **dadurch gekennzeichnet, dass** eine Mantelaußenfläche (20) des Ansatzes (11) des Führungsholmes (4) teilringförmig und ein Segment der Mantelaußenfläche (20) des Ansatzes (11) abgeflacht geformt ist, wobei der Ansatz (11) von einem auf dem Bremsträgers (1) aufliegenden Verdrehsicherungsring (21) umschlossen ist, welcher eine zur Schraube (5) parallel sich erstreckende Bohrung (26) aufweist, in der ein den Verdrehsicherungsring (21) relativ zum Bremsträger (1) gegen Verdrehen sichernder Stift aufgenommen ist, der sich in eine entsprechende Bohrung im Bremsträger (1) erstreckt.

15. Scheibenbremse nach Anspruch 12, **dadurch gekennzeichnet, dass** eine Mantelaußenfläche (20) des Ansatzes (11) des Führungsholmes (4) und eine Mantelinnenfläche der Ausnehmung des Bremsträgers (1) teilringförmig ausgebildet sind, wobei ein Segment der Mantelaußenfläche des Ansatzes (11) und ein Segment der Mantelinnenfläche der Ausnehmung des Bremsträgers (1) eine Aufnahme (18) aufweisen, in der eine Passfeder eingelegt ist.

16. Scheibenbremse nach einem der Ansprüche 12 bis 15, **dadurch gekennzeichnet, dass** zumindest ein Teilbereich der Mantelaußenfläche (20) des Ansatzes (11) angeformte Prägeelemente (12) aufweist, die unter Bildung eines Formschlusses und/oder eines Reibschlusses eingeprägt in den Bremsträger (1) eingreifen.

17. Scheibenbremse nach einem der vorhergehenden Ansprüche, **dadurch gekennzeichnet, dass** eine an am Bremsträger (1) anliegende Stirnfläche (9) des Führungsholmes (4) und eine Ausnehmung des Bremsträgers (1) zur Aufnahme zumindest der Stirnfläche (9) des Führungsholmes (4) kegelmantelförmig ausgebildet ist, wobei die Stirnfläche (9) des Führungsholmes (4) zur Schraube (5) hin ansteigend oder abfallend ausgebildet ist.

18. Scheibenbremse nach Anspruch 17, **dadurch gekennzeichnet, dass** der Führungsholm (4) und/oder die Schraube (5) mit dem Bremsträger (1) verklebt ist.

19. Scheibenbremse nach Anspruch 17, **dadurch gekennzeichnet, dass** der Führungsholm (4) an seiner am Bremsträger (1) anliegenden Stirnfläche (9) mit einer Diamantsprühbeschichtung versehen ist.

20. Scheibenbremse nach einem der vorhergehenden Ansprüche, **dadurch gekennzeichnet, dass** zwischen einem Schraubenkopf (15) der Schraube (5) und einer Auflagefläche (28) des Schraubenkopfes (15) im Führungsholm (4) ein Gleitring (27) angeordnet ist.

21. Scheibenbremse nach einem der vorhergehenden Ansprüche, **dadurch gekennzeichnet, dass** die Bohrung (10) im Führungsholm (4), in der die Schraube (5) aufgenommen ist, exzentrisch zur Drehachse (A₄) des Führungsholmes (4) verschoben ist.

## Claims

1. Disc brake for a utility vehicle,
- having a brake calliper (8) engaging over a brake disc,
- said brake calliper being displaceably held on at least one guide bar (4), which is connected to a stationary brake carrier (1) by means of a screw (5),
- wherein the screw (5) is fed through the guide bar (4),
**characterised in that**
- the guide bar (4) has impressing elements (12), configured as toothing, integrally formed on its end face (9), which bears against the brake carrier (1), at least in a circumferential or radial partial region, said impressing elements (12) engaging through being impressed into the brake carrier (1), thereby forming a positively locking connection, wherein the impressing elements (12) have a greater hardness than the brake carrier (1) in the abutment region of the guide bar (4) and/or
- a bearing face (19) of the brake carrier (1), against which the end face (9) of the guide bar (4) bears, has impressing elements (12) which are integrally formed at least in a circumferential or radial partial region, and which engage through being impressed into the end face (9), thereby forming a positively locking connection and/or a frictionally locking connection, wherein the impressing elements (12) have a greater hardness than the end face (9) of the guide bar (4) in the abutment region of the brake carrier (1),
- wherein the impressing elements (12) are configured as points or edges distributed in an ordered or unordered manner and of equal or unequal height.

2. Disc brake according to claim 1,
**characterised in that**
the impressing elements (12) of the abutment region (19) of the brake carrier (1) are configured as knurling or toothing.

3. Disc brake according to one of the preceding claims,
**characterised in that**
the impressing elements (12) are arranged in a concentric annular region.

4. Disc brake according to one of the preceding claims,
**characterised in that**
a planar surface (13) is formed adjacent to the impressing elements (12) in at least one concentric partial region of the end face (9).

5. Disc brake according to claim 4,
**characterised in that**
the planar surface (13) is provided in an annular region which is concentric and inner and/or outer relative to the impressing elements (12).

6. Disc brake according to one of claims 4 or 5,
**characterised in that**
the planar surface (13) is recessed or protrudes in the axial direction relative to the impressing elements (12).

7. Disc brake according to one of claims 4 to 6,
**characterised in that**
regions with impressing elements (12) and regions with planar surfaces (13) are configured alternately as segment regions around the circumference.

8. Disc brake according to claim 7,
**characterised in that**
at least three segment regions are provided in each case, preferably having the same angular spacing from one another.

9. Disc brake according to one of the preceding claims,
**characterised in that**
the toothing (12) is configured as crown gear toothing, the tooth flanks thereof being radially oriented.

10. Disc brake according to one of the preceding claims,
**characterised in that**
the toothing (12) is configured as spline toothing.

11. Disc brake according to one of the preceding claims,
**characterised in that**
the guide bar (4) is hardened at least in the region of the impressing elements (12) after they have been put in place.

12. Disc brake according to one of the preceding claims,
**characterised in that**
the guide bar (4) has a projection (11), which is received fixedly in a recess, adapted thereto, of the brake carrier (1) so as to rotate with it, with the formation of a positively locking connection.

13. Disc brake according to claim 12,
**characterised in that**
a circumferential outer face (20) of the projection (11) of the guide bar (4) and a circumferential inner face of the recess of the brake carrier (1) have a polygonal configuration.

14. Disc brake according to claim 12,
**characterised in that**
a circumferential outer face (20) of the projection (11) of the guide bar (4) is part-annular and a segment of the circumferential outer face (20) of the projection (11) is flattened, wherein the projection (11) is enclosed by an anti-rotation security ring (21) lying on top of the brake carrier (1), which has a bore (26) extending parallel to the screw (5), in which bore a pin is received which secures the anti-rotation security ring (21) against rotating with respect to the brake carrier (1), said pin extending in a corresponding bore in the brake carrier (1).

15. Disc brake according to claim 12,
**characterised in that**
a circumferential outer face (20) of the projection (11) of the guide bar (4) and a circumferential inner face of the recess of the brake carrier (1) are formed part-annularly, wherein a segment of the circumferential outer face of the projection (11) and a segment of the circumferential inner face of the recess of the brake carrier (1) have a receptacle (18), in which a feather key is inserted.

16. Disc brake according to one of claims 12 to 15,
**characterised in that**
at least a part region of the circumferential outer face (20) of the projection (11) has impressing elements (12) integrally formed on it, the impressing elements (12) engaging through being impressed into the brake carrier (1), thereby forming a positively locking connection and / or a frictionally locking connection.

17. Disc brake according to one of the preceding claims,
**characterised in that**
an end face (9), which bears against the brake carrier (1), of the guide bar (4) and a recess of the brake carrier (1) are of cone envelopeshaped configuration for receiving at least the end face (9) of the guide bar (4), wherein the end face (9) of the guide bar (4) is configured so as to ascend towards the screw (5) or so as to descend towards the screw (5).

18. Disc brake according to claim 17,
**characterised in that**
the guide bar (4) and/or the screw (5) is/are adhesively bonded to the brake carrier (1).

19. Disc brake according to claim 17,
**characterised in that**
the guide bar (4) is provided with a diamond spray coating on its end face (9) which bears against the brake carrier (1).

20. Disc brake according to one of the preceding claims,
**characterised in that**
a sliding ring (27) is arranged between a screw head (15) of the screw (5) and a supporting face (28) of the screw head (15) in the guide bar (4).

21. Disc brake according to one of the preceding claims,
**characterised in that**
the bore (10) in the guide bar (4), in which bore (10) the screw (5) is received, is displaced eccentrically with respect to the rotational axis (A₄) of the guide bar (4).

## Revendications

1. Frein à disque d'un véhicule utilitaire,
- comprenant un étrier (8) de frein, qui enjambe un disque de frein,
- qui est maintenu coulissant sur au moins un longeron (4) de guidage relié à un support (1) de frein fixe en position au moyen d'une vis (5),
- dans lequel la vis (5) est guidée dans le longeron (4) de guidage,
**caractérisé en ce que**
- le longeron (4) de guidage a, sur sa surface (9) s'appliquant au support (1) de frein, des éléments (12) d'estampage, qui sont formés au moins dans une région partielle périphérique ou radiale, qui sont constitués sous la forme d'une denture et qui, estampés en formant une complémentarité de forme, pénètrent dans le support (1) de frein, dans lequel les éléments (12) d'estampage ont une dureté plus grande que le support (1) de frein dans la partie d'application du longeron (4) de guidage et/ou
- une surface (19) d'application du support (1) de frein, à laquelle s'applique la surface (9) frontale du longeron (4) de guidage, a des éléments (12) d'estampage, qui sont formés au moins dans une région partielle périphérique ou radiale et qui, estampés en formant une complémentarité de forme et/ou une coopération à frottement, pénètrent dans la surface (9) frontale, dans lequel les éléments (12) d'estampage ont une dureté plus grande que la surface (9) frontale du longeron (4) de guidage dans la partie d'application du support (1) de frein,
- dans lequel les éléments (12) d'estampage sont constitués sous forme de pointes ou d'arêtes réparties de manière ordonnée ou désordonnée de la même hauteur ou de hauteur différente.

2. Frein à disque suivant la revendication 1, **caractérisé en ce que** les éléments (12) d'estampage de la surface (9) d'application du support (1) de frein sont constitués sous la forme d'un moletage ou d'une denture.

3. Frein à disque suivant l'une des revendications précédentes, **caractérisé en ce que** les éléments (12) d'estampage sont disposés dans une partie annulaire concentrique.

4. Frein à disque suivant l'une des revendications précédentes, **caractérisé en ce qu'**au voisinage des éléments (12) d'estampage, une surface (13) plane est constituée dans au moins une région partielle concentrique de la surface (9) frontale.

5. Frein à disque suivant la revendication 4, **caractérisé en ce que** la surface (13) plane est prévue dans une partie annulaire concentrique intérieure et/ou extérieure par rapport aux éléments (12) d'estampage.

6. Frein à disque suivant l'une des revendications 4 ou 5, **caractérisé en ce que** la surface (13) plane est en creux ou en saillie dans la direction axiale par rapport aux éléments (12) d'estampage.

7. Frein à disque suivant l'une des revendications 4 à 6, **caractérisé en ce que** des parties ayant des éléments (12) d'estampage et des parties ayant des surfaces (13) planes sont constituées sur le pourtour en alternance respectivement sous la forme de parties de segment.

8. Frein à disque suivant la revendication 7, **caractérisé en ce que** respectivement au moins trois parties de segment sont prévues, de préférence à la même distance angulaire les unes des autres.

9. Frein à disque suivant l'une des revendications précédentes, **caractérisé en ce que** la denture (12) est constituée sous la forme d'une denture plane, dont les flancs de dents sont dirigés radialement.

10. Frein à disque suivant l'une des revendications précédentes, **caractérisé en ce que** la denture (12) est constituée sous la forme d'une denture à coins.

11. Frein à disque suivant l'une des revendications précédentes, **caractérisé en ce que** le longeron (4) de guidage est durci, après son introduction, au moins dans la partie des éléments (12) d'estampage.

12. Frein à disque suivant l'une des revendications précédentes, **caractérisé en ce que** le longeron (4) de guidage a un prolongement (11, qui est reçu fixe en rotation en formant une complémentarité de forme dans un évidement adapté à celui-ci du support (1) de frein.

13. Frein à disque suivant la revendication 12, **caractérisé en ce qu'**une surface (20) extérieure ou latérale du prolongement (11) du longeron (4) de guidage et une surface intérieure latérale de l'évidement du support (1) de frein sont constituées sous la forme d'un polygone.

14. Frein à disque suivant la revendication 12, **caractérisé en ce qu'**une surface (20) extérieure latérale du prolongement (11) du longeron (4) de guidage est en forme d'anneau partiel et un segment de la surface (20) extérieure latérale du prolongement (11) est aplati, le prolongement (11) étant entouré d'un anneau (21) d'anti-torsion, qui s'applique au support (1) de frein et qui a un alésage (26) s'étendant parallèlement à la vis (5), dans lequel est reçue une broche empêchant l'anneau (21) d'anti-torsion de tourner par rapport au support (1) de frein, broche qui s'étend dans un trou correspondant du support (1) de frein.

15. Frein à disque suivant la revendication 12, **caractérisé en ce qu'**une surface (20) extérieure latérale du prolongement (11) du longeron (4) de guidage et une surface intérieure latérale de l'évidement du support (1) de frein sont constituées sous la forme d'un anneau partiel, dans lequel un segment de la surface extérieure latérale du prolongement (11) et un segment de la surface intérieure latérale du l'évidement du support (1) de frein (11) ont un logement (18), dans lequel est insérée une clavette.

16. Frein à disque suivant l'une des revendications 12 à 15, **caractérisé en ce qu'**au moins une région partielle de la surface (20) extérieure latérale du prolongement (11) a des éléments (12) d'estampage venus de matière, qui, estampés en formant une complémentarité de forme et/ou une coopération de frottement, pénètrent dans le support (1) de frein.

17. Frein à disque suivant l'une des revendications précédentes, **caractérisé en ce qu'**une surface (9) frontale, s'appliquant au support (1) de frein, du longeron (4) de guidage et un évidement du support (1) de frein, est constitué en forme de surface latérale conique pour la réception d'au moins la surface (9) frontale du longeron (4) de guidage, dans lequel la surface (9) frontale du longeron (4) de guidage est constituée montante ou descendante vers la vis (5).

18. Frein à disque suivant la revendication 17, **caractérisé en ce que** le longeron (4) de guidage et/ou la vis (5) est collé(e) au support (1) de frein.

19. Frein à disque suivant la revendication 17, **caractérisé en ce que** le longeron (4) de guidage est pourvu, sur sa surface (9) frontale, s'appliquant au support (1) de frein, d'un revêtement de diamant par pulvérisation.

20. Frein à disque suivant l'une des revendications précédentes, **caractérisé en ce qu'**une bague (27) de friction est montée entre une tête (15) de la vis (5) et une surface (28) d'application de la tête (5) de la vis dans le longeron (4) de guidage.

21. Frein à disque suivant l'une des revendications précédentes, **caractérisé en ce que** l'alésage (10) du longeron (4) de guidage, dans lequel est reçue la vis (5), est excentrée par rapport à l'axe (A₄) de rotation du longeron (4) de guidage.
